# EUROPÄISCHE PATENTANMELDUNG

(11) **EP 3 832 843 A1**
(43) Veröffentlichungstag der Anmeldung: **09.06.2021**
(21) Anmeldenummer: 20210053.3
(22) Anmeldetag: 26.11.2020
(51) Int. Cl.: H02J 7/00

(54) **BATTERIEBETRIEBENES OBJEKT UND VERFAHREN ZUM BETREIBEN DES BATTERIEBETRIEBENEN OBJEKTS**

(30) Priorität: 06.12.2019 DE 102019219018
(71) Anmelder: Robert Bosch GmbH, 70442 Stuttgart (DE)
(72) Erfinder: Landa, Sven, 71732 Tamm (DE); Gleiter, Andreas, 70437 Stuttgart (DE)

(57) **Zusammenfassung**

Die Erfindung betrifft ein Verfahren zum Betrieben eines batteriebetriebenen Objekts (1). Das batteriebetriebene Objekt (1) umfasst mindestens zwei Batteriemodule (10) wobei jedes Batteriemodul (10) ein Gehäuse (114) mit einem elektrischen Anschluss (112), mindestens eine Batteriezelle (110), einen Trennschalter (108) zum Trennen einer elektrischen Verbindung zwischen dem elektrischen Anschluss (112) und der mindestens einen Batteriezelle (110), einen Gleichstromwandler (102) und eine Steuereinheit (104) zum Steuern eines Ladestroms zum Aufladen der mindestens einen Batteriezelle (110) umfasst. Durch jede der Steuereinheiten (104) wird ein Ladezustand des jeweiligen Batteriemoduls (10) erfasst und bei Vorliegen einer Abweichung der Ladezustände der Batteriemodule (10) oberhalb eines vorgegebenen Grenzwerts wird ein Ladungsausgleich ausgeführt. Zum Ausgleichen des Ladezustands jeweils zweier Batteriemodule (10) wird der Trennschalter (108) eines ersten Batteriemoduls (11), welches von den beiden Batteriemodulen (10) den geringeren Ladezustand aufweist, geöffnet und von einem zweiten Batteriemodul (12), welches von den beiden Batteriemodulen (10) den höheren Ladezustand aufweist geschlossen. Über den Gleichstromwandler (102) des ersten Batteriemoduls (11) wird anschließend ein Ladestrom bereitgestellt, um die mindestens eine Batteriezelle (110) des ersten Batteriemoduls (11) aufzuladen.

Weitere Aspekte der Erfindung betreffen ein solches batteriebetriebenes Objekt (1) sowie ein Batteriemodul (10) zur Verwendung mit dem batteriebetriebenen Objekt (1).

## Beschreibung

Die Erfindung betrifft ein Verfahren zum Betrieben eines batteriebetriebenen Objekts umfassend mindestens zwei Batteriemodule wobei jedes Batteriemodul ein Gehäuse mit einem elektrischen Anschluss und mindestens eine Batteriezelle umfasst. Weitere Aspekte der Erfindung betreffen ein solches batteriebetriebenes Objekt sowie ein Batteriemodul zur Verwendung mit dem batteriebetriebenen Objekt.

### Stand der Technik

Bei batteriebetriebenen Objekten, wie beispielsweise kleinen elektrischen Fahrzeugen wie zum Beispiel eBikes, eScooter und dergleichen, aber auch in elektrischen Werkzeugen, Drohnen und vielen weiteren Objekten werden Batterien eingesetzt, welche je nach Ausgestaltung des Objekts im batteriebetriebenen Objekt selbst geladen werden oder zum Laden aus dem batteriebetriebenen Objekt entnommen werden. Des Weiteren kann bei einem solchen batteriebetriebenen Objekt vorgesehen sein, dass eine Aufladung der Batterien sowohl innerhalb des Objekts als auch außerhalb des Objekts möglich ist. Bei batteriebetriebenen Objekten, welche eine hohe Leistung benötigen, sind in der Regel mehrere Batteriemodule vorgesehen, welche wiederum eine Vielzahl von Batteriezellen umfassen können. Beispielweise kann es sich bei den Batteriezellen um Lithium-basierte Batteriezellen wie z.B. Lithium-Ionen oder Lithium-Polymer Batteriezellen handeln.

Aus DE 10 2017 209 282 A1 ist eine Ladevorrichtung zum Laden von Batterien in einem batteriebetriebenen Objekt bekannt. Dabei ist vorgesehen, die Batterien zu laden, ohne diese aus dem Objekt zu entnehmen. Das Objekt umfasst dabei eine Batterie und mindestens eine Zusatzbatterie, welche jeweils mehrere Batteriezellen aufweisen. Die Ladevorrichtung umfasst ein Steuermodul und mindestens ein Zusatzsteuermodul, die zur Spannungsversorgung über Verbindungsleitungen in Reihe geschaltet sind, wobei das Steuermodul mit der Batterie und jeweils ein Zusatzsteuermodul mit einer Zusatzbatterie verbunden ist. Die Steuermodule können über einen Bus gekoppelt werden, um untereinander Daten auszutauschen und die Ladespannungen für die einzelnen Zellen freizugeben. Sollen die Batterien nacheinander geladen werden können einzelne Steuermodule über Schaltelemente abgekoppelt werden, so dass die entsprechende Batterie zeitweise von dem Ladevorgang ausgeschlossen wird.

Bei batteriebetriebenen Objekten mit mehreren Batterien, welche ein Aufladen einzelner Batterien außerhalb des batteriebetriebenen Objekts ermöglichen, kann es zu starken Unterschieden im Ladezustand der Batterien mit unterschiedlichen Spannungen kommen. Diese unterschiedlichen Spannungen können, wenn die Batterien im batteriebetriebenen Objekt zusammengeschaltet werden, einen großen Ausgleichsstrom innerhalb der Batterien beim direkten Zusammenschalten verursachen. Dies ist unerwünscht und große Ausgleichsströme sind für die verwendeten Batteriezellen nicht zulässig.

Um einen unterschiedlichen Ladezustand zwischen den einzelnen Batterien auszugleichen, kann beispielsweise das batteriebetriebene Objekt zunächst nur aus der bzw. denjenigen Batterien versorgt werden, welche einen höheren Ladezustand als andere Batterien aufweisen. Dazu können die Batterien mit einem integrierten Schalter versehen werden, der im zusammengeschalteten Zustand der Batterien die Batterien mit geringem Ladezustand von Batterien mit einem höheren Ladezustand voneinander trennt und somit die Ausgleichströme verhindert. Sobald die Ladezustände der Batterien angeglichen sind, kann das batteriebetriebene Objekt parallel aus mehreren oder sogar allen Batterien versorgt werden. Nachteilig hieran ist, dass bis zum Erreichen des Ausgleichs zwischen den Ladezuständen der einzelnen Batterien nur eine begrenzte Leistung des batteriebetriebenen Objekts zur Verfügung steht.

### Offenbarung der Erfindung

Es wird ein Verfahren zum Betrieben eines batteriebetriebenen Objekts vorgeschlagen. Das batteriebetriebene Objekt umfasst mindestens zwei Batteriemodule wobei jedes Batteriemodul ein Gehäuse mit einem elektrischen Anschluss, mindestens eine Batteriezelle, einen Trennschalter zum Trennen einer elektrischen Verbindung zwischen dem elektrischen Anschluss und der mindestens einen Batteriezelle, einen Gleichstromwandler und eine Steuereinheit zum Steuern eines Ladestroms zum Aufladen der mindestens einen Batteriezelle umfasst. Die elektrischen Anschlüsse aller Batteriemodule sind zueinander über eine gemeinsame Stromführung parallel geschaltet, wobei durch jede der Steuereinheiten ein Ladezustand des jeweiligen Batteriemoduls erfasst wird und bei Vorliegen einer Abweichung der Ladezustände der Batteriemodule oberhalb eines vorgegebenen Grenzwerts ein Ladungsausgleich ausgeführt wird.

Zum Ausgleichen des Ladezustands jeweils zweier der mindestens zwei Batteriemodule wird der Trennschalter eines ersten Batteriemoduls, welches von den beiden Batteriemodulen den geringeren Ladezustand aufweist, geöffnet und von einem zweiten Batteriemodul, welches von den beiden Batteriemodulen den höheren Ladezustand aufweist, geschlossen. Über den Gleichstromwandler des ersten Batteriemoduls wird anschließend ein Ladestrom bereitgestellt, um die mindestens eine Batteriezelle des ersten Batteriemoduls aufzuladen. Der Gleichstromwandler des zweiten Batteriemoduls ist dabei abgeschaltet und wird durch den geschlossenen Trennschalter überbrückt.

Die einzelnen Batteriemodule sind jeweils dazu eingerichtet, aus dem batteriebetriebenen Objekt entnommen und mit einem externen Ladegerät aufgeladen zu werden. Ergeben sich dabei unterschiedliche Ladezustände, beispielsweise da nicht alle Batteriemodule vollständig aufgeladen wurden, wird mit dem vorgeschlagenen Verfahren ein Ladungsausgleich durchgeführt. Dabei wird bei zwei Batteriemodulen, wobei das zweite Batteriemodul den höheren Ladezustand aufweist, Energie bereitgestellt und zum Aufladen des ersten Batteriemoduls verwendet. Durch entsprechendes Schalten der Trennschalter werden dabei die Batteriezellen des zweiten Batteriemoduls direkt mit der gemeinsamen Stromführung verbunden. Sofern weitere Batteriemodule einen mit dem zweiten Batteriemodul identischen Ladezustand aufweisen, können deren Trennschalter ebenfalls geschlossen werden, um diese alle gleichmäßig während des Ausgleichs zu entladen. Andernfalls ist es bevorzugt, die Trennschalter der übrigen und somit am Ladungsausgleich nicht beteiligten Batteriemodule zu öffnen.

Ein Ladungsausgleich wird bevorzugt dann vorgenommen, wenn die Ladezustände der beiden beteiligten Batteriemodule um mehr als 10 % bevorzugt um mehr als 5 % voneinander abweichen. Bei geringeren Abweichungen wird davon ausgegangen, dass die Ladezustände gleich sind bzw. übereinstimmen. Entsprechend ist dann zwischen diesen beiden Batteriemodulen kein Ladungsausgleich erforderlich.

Zum Aufladen der jeweiligen Batteriezellen verfügt jedes der Batteriemodule über einen Gleichstromwandler, oft auch als DC/DC-Wandler bezeichnet, sowie über eine Steuereinheit, um den für das Aufladen erforderlich Ladestrom bereitzustellen. Der Gleichstromwandler ist unter Umgehung des Trennschalters direkt mit der gemeinsamen Stromführung verbunden und kann somit über die gemeinsame Stromführung elektrische Energie aus dem zweiten Batteriemodul erhalten, um den Ladestrom bereitzustellen.

Der Trennschalter, mit dem die Batteriezellen der Batteriemodule von deren elektrischen Anschlüssen und damit von der gemeinsamen Stromführung getrennt werden können, kann beispielsweise als ein mechanischer Schalter wie ein Relais oder ein Halbleiterschalter ausgestaltet sein.

Um Informationen zwischen den Steuereinheiten der jeweiligen Batteriemodule sowie gegebenenfalls einer übergeordneten Steuereinheit auszutauschen, ist bevorzugt ein Bus vorgesehen, welcher die entsprechenden Steuereinheiten miteinander verbindet. Insbesondere können die Steuereinheiten über den Bus den ermittelten Ladezustand der Batteriemodule untereinander austauschen und somit das Durchführen des Ladungsausgleichs koordinieren. Der Bus kann beispielsweise als ein CAN-Bus ausgestaltet sein.

Bevorzugt wird beim Aufladen der mindestens einen Batteriezelle des ersten Batteriemoduls ein Ladestrom bis zum Erreichen eines vorgegebenen Zellspannungswerts auf einen vorgegebenen Stromwert konstant gehalten und nach dem Erreichen der vorgegebenen Zellspannung derart reduziert, dass die Zellspannung auf dem vorgegebenen Zellspannungswert gehalten wird.

Dieses Ladeverfahren wird auch als CCCV (constant current constant voltage) bezeichnet und nimmt Rücksicht auf die besonderen Anforderungen der Lithiumbasierenden Batteriezellen, damit diese beim Laden keine Beschädigung erfahren. Bei dem CCCV Verfahren werden die Batteriezellen zuerst mit einem Konstantstrom (constant current) geladen. Dadurch ist der Ladestrom begrenzt und es wird in der Anfangsphase ein zu hoher Ladestrom vermieden. Die Konstantstromladung erfolgt solange bis eine Ladeschlussspannung der Batteriezellen erreicht ist. Entsprechend ist es bevorzugt, als vorgegebenen Zellspannungswert diese Ladeschlussspannung vorzugeben. Die Ladeschlussspannung wird bei etwa 70 % bis 80 % der Nennkapazität der Batteriezelle erreicht. Anschließend wird mit Konstantspannung (constant voltage) weitergeladen wodurch der Ladeschlussspannung nicht überschritten werden kann. Mit steigender Ladung verringert sich der Ladestrom.

Bevorzugt wird beim Aufladen einer Batteriezelle eine Überwachung durchgeführt, wobei ein oder mehrere sicherheitsrelevante Parametern wie die Temperatur der Batteriezellen, der Strom und/oder die Spannung überwacht werden können. Überschreitet ein Parameter eine festgelegte Grenze, erfolgt bevorzugt eine Unterbrechung des Ladevorgangs und damit des Ladungsausgleichs. Des Weiteren kann vorgesehen sein, dass diese Parameter zwischen den Batteriemodulen sowie ggf. einer übergeordneten Steuereinheit über den Bus übermittelt werden.

Bevorzugt wird das Aufladen der mindestens einen Batteriezelle des ersten Batteriemoduls beendet, wenn der Ladezustand des ersten Batteriemoduls dem des zweiten Batteriemoduls entspricht. Dies ist insbesondere dann vorteilhaft, wenn das batteriebetriebene Objekt genau zwei Batteriemodule umfasst. Der Ladezustand wird beispielsweise dann als dem des zweiten Batteriemoduls entsprechend angesehen, wenn die Differenz unterhalb des vorgegebenen Grenzwertes liegt.

Bevorzugt umfasst das batteriebetriebene Objekt mindestens drei Batteriemodule und es wird für jedes Batteriemodul ein Zielladezustand bestimmt. Bei der anschließenden Ausführung des Ladungsausgleichs wird dann das Aufladen des ersten Batteriemoduls jeweils beendet, wenn dieses seinen Zielladezustand erreicht hat. Der Zielladezustand gilt beispielsweise dann als erreicht, wenn die Differenz zwischen dem tatsächlichen Ladezustand und dem Zielladezustand unterhalb des vorgegebenen Grenzwertes liegt.

Bevorzugt werden dann, wenn mindestens zwei Batteriemodule einen im Wesentlichen identischen Ladezustand aufweisen, die mindestens zwei Batteriemodule mit im Wesentlichen identischen Ladezuständen während des Ausführens des Ladungsausgleichs gemeinsam als zweite Batteriemodule verwendet, wobei deren Trennschalter geschlossen werden.

Nicht nur die Batteriemodule können mit Bezug zueinander unterschiedliche Ladezustände aufweisen. Bestehen die Batteriemodule aus mehreren Batteriezellen, können auch die unterschiedlichen Batteriezellen eines Batteriemoduls mit Bezug zueinander unterschiedliche Ladezustände aufweisen.

Bevorzugt erfolgt ein gemeinsames Aufladen aller Batteriemodule durch ein Verbinden eines externen Netzteils mit der gemeinsamen Stromführung. Das Netzteil stellt dabei eine Gleichspannung bereit, die oberhalb der Nennspannung der Batteriemodule liegt. Zum Aufladen der Batteriemodule werden deren Trennschalter geöffnet und über die jeweiligen Gleichstromwandler und Steuereinheiten wird für die Batteriezellen der jeweiligen Batteriemodule ein Ladestrom bereitgestellt. Das externe Netzteil umfasst dabei keine Steuereinheit und muss nicht mit dem Bus für eine Kommunikation mit den einzelnen Steuereinheiten der Batteriemodule verbunden werden. Das externe Netzteil stellt lediglich eine Gleichspannung bereit und kann dazu beispielsweise einen Gleichrichter und einen Gleichstromwandler umfassen, um eine Netzspannung, welche in der Regel eine Wechselspannung ist, gleichzurichten und auf eine Spannung zu wandeln, welche für die Gleichstromwandler der Batteriemodule als Eingangsspannung geeignet ist. Sind die Batteriemodule für eine Nominalspannung von 48 V ausgelegt, wird durch das externe Netzteil beispielsweise eine Spannung von 60 V bereitgestellt. Die Spannung des Ladestroms für die Batteriezellen wird dann durch den Gleichstromwandler des Batteriemoduls eingestellt, beispielsweise im Bereich von 20 bis 60 V.

Nach einem Ausgleichen der Ladezustände und damit der einzelnen Spannungen der Batteriemodule sind bevorzugt alle Batteriemodule durch Schließen ihrer Trennschalter mit der gemeinsamen Stromführung verbunden. Die Gleichstromwandler der Batteriezellen sind in diesem Zustand jeweils abgeschaltet. Ein Verbraucher des batteriebetriebenen Objekts, wie beispielsweise ein Elektromotor, kann dann durch alle Batteriemodule versorgt werden, welche dann parallel zueinander geschaltet und mit der gemeinsamen Stromführung verbunden sind. Auch ein Rekuperieren von Energie, beispielsweise beim Abbremsen eines elektrisch angetriebenen Fahrzeugs kann dabei mit allen Batteriemodulen erfolgen, welche dann entsprechend wieder aufgeladen werden.

Ein weiterer Aspekt der Erfindung ist, ein Batteriemodul bereitzustellen. Das vorgeschlagene Batteriemodul umfasst ein Gehäuse mit einem elektrischen Anschluss, mindestens eine Batteriezelle, einen Trennschalter zum Trennen einer elektrischen Verbindung zwischen dem elektrischen Anschluss und der mindestens einen Batteriezelle, einen Gleichstromwandler und eine Steuereinheit zum Steuern eines Ladestroms zum Aufladen der mindestens einen Batteriezelle.

Das Batteriemodul ist bevorzugt dazu eingerichtet, bei Aufnahme in einem batteriebetriebenen Objekt die durch das Batteriemodul auszuführenden Schritte eines der hierin beschriebenen Verfahren auszuführen. Entsprechend gelten im Rahmen eines der Verfahren beschriebene Merkmale für das Batteriemodul und umgekehrt gelten im Rahmen des Batteriemoduls beschriebene Merkmale für die Verfahren.

Für eine Koordinierung des Ladungsausgleichs zwischen zwei Batteriemodulen umfasst das Batteriemodul bevorzugt ein Bus-Modul und einen Busanschluss, über den ein Bus mit dem Batteriemodul verbindbar ist. Des Weiteren ist die Steuereinheit des Batteriemoduls insbesondere dazu eingerichtet, über den Bus Angaben über den Ladezustand des Batteriemoduls mit anderen Batteriemodulen auszutauschen und gemäß einem der vorgeschlagenen Verfahren einen Ladungsausgleich zwischen jeweils zwei Batteriemodulen zu koordinieren.

Das Batteriemodul ist bevorzugt dazu eingerichtet, in einem batteriebetriebenen Objekt aufgenommen zu werden. Insbesondere ist dazu das Batteriemodul als wechselbares Batteriemodul ausgestaltet, so dass das Gehäuse des Batteriemoduls einen ausreichenden Schutz vor mechanischen Beschädigungen und anderen Umwelteinflüssen bietet, auch dann, wenn das Batteriemodul nicht in einem batteriebetriebenen Objekt aufgenommen ist.

Das Batteriemodul ist beispielsweise als ein 48 V Batteriemodul zur Verwendung mit elektrischen Werkzeugen oder einem elektrisch angetriebenen Kleinfahrzeug wie ein eBike oder ein eScooter eingerichtet.

Der in dem Batteriemodul aufgenommene Gleichstromwandler sowie die Steuereinheit sind bevorzugt dazu eingerichtet, zusammen mit einem externen Netzteil, welches eine Gleichspannung oberhalb einer Nennspannung des Batteriemoduls bereitstellt, ein Ladegerät zum Aufladen der Batteriezellen des Batteriemoduls zu bilden. Das Netzteil selbst weist dabei keine Steuereinheit auf und stellt lediglich die Gleichspannung bereit. Zum Laden der Batteriezellen wird der Trennschalter des Batteriemoduls geöffnet und über den im Batteriemodul enthaltenen Gleichstromwandler und die ebenfalls enthaltene Steuereinheit ein Ladestrom bereitgestellt.

Ein weiterer Aspekt der Erfindung ist das Bereitstellen eines Batteriebetriebenen Objekts. Das vorgeschlagene batteriebetriebene Objekt umfasst mindestens zwei der hierin beschriebenen Batteriemodule und eine Stromführung, über die die Batteriemodule zueinander elektrisch parallel geschaltet sind. Des Weiteren ist vorgesehen, dass das batteriebetriebene Objekt zusätzlich einen Bus umfasst, welcher mit den Batteriemodulen verbindbar ist und eine Kommunikation der Batteriemodule untereinander ermöglicht, und dass die Batteriemodule derart am batteriebetriebenen Objekt aufgenommen sind, dass diese einzeln entnommen und wieder eingesetzt werden können.

Das batteriebetriebene Objekt ist bevorzugt dazu eingerichtet eines der hierin beschriebenen Verfahren auszuführen. Entsprechend gelten im Rahmen eines der Verfahren beschriebene Merkmale für das batteriebetriebene Objekt und umgekehrt gelten im Rahmen des batteriebetriebenen Objekts beschriebene Merkmale für die Verfahren.

Bevorzugt umfasst das batteriebetriebene Objekt ferner einen Stromanschluss, über den ein externes Netzteil mit der Stromführung verbindbar ist. Das Netzteil ist dabei dazu eingerichtet, eine Gleichspannung bereitzustellen, welche oberhalb der Nennspannung der Batteriemodule liegt. Durch Anschließen des externen Netzteils wird eine Gleichspannung an der gemeinsamen Stromführung des batteriebetriebenen Objekts bereitgestellt, welche ein Aufladen der Batteriemodule ermöglicht. Dabei werden die Trennschalter der Batteriemodule geöffnet und über den im Batteriemodul enthaltenen Gleichstromwandler und die ebenfalls enthaltene Steuereinheit ein Ladestrom bereitgestellt. Eine Steuereinheit im externen Netzteil ist dabei nicht erforderlich.

Bevorzugt ist das batteriebetriebene Objekt als ein elektrisch angetriebenes Werkzeug oder als ein elektrisch angetriebenes Fahrzeug ausgestaltet. Besonders bevorzugte Beispiele für ein elektrisch angetriebenes Fahrzeug umfassen elektrisch angetriebene Zweiräder, insbesondere eBikes, Roller oder als Tretroller, insbesondere eScooter. Besonders bevorzugt handelt es sich bei dem Roller um einen Roller der L1e oder L3e Klasse, welcher mehrere Batteriemodule aufweist.

### Vorteile der Erfindung

Die erfindungsgemäßen Batteriemodule weisen mit dem integrierten Gleichstromwandler und der Steuereinheit eine integrierte Ladeeinheit auf. Diese in das jeweilige Batteriemodul integrierte Ladeeinheit kann zum einen dazu verwendet werden, dieses regulär unter Verwendung eines externen Netzteils aufzuladen. Das externe Netzteil kann dabei besonders einfach aufgebaut werden, da dieses nur eine für den Gleichstromwandler geeignete Gleichspannung bereitstellen muss, aber keine Laderegelung für die Batteriezellen des Batteriemoduls vornehmen muss.

Vorteilhafterweise wird die integrierte Ladeeinheit bei dem vorgeschlagenen Verfahren nicht nur zum regulären Aufladen der Batteriezellen verwendet, sondern auch für das Ausführung eines Ladungsausgleichs verschiedener Ladezustände zwischen jeweils zwei Batteriemodulen. Dabei werden die Batteriezellen eines ersten Batteriemoduls unter Verwendung des integrierten Gleichstromwandlers und der integrierten Steuereinheit aufgeladen, wobei ein zweites Batteriemodul, welches einen höheren Ladezustand aufweist, die elektrische Energie bereitstellt. Der Ladungsausgleich kann dadurch kontrolliert und für die einzelnen Batteriezellen besonders schonend durchgeführt werden.

Somit wird ein Ladungsausgleich zwischen mehreren Batteriemodulen ermöglicht, bei dem nicht unnötig Energie verbraucht werden muss. Nach dem Ausführen des Ladungsausgleichs stehen alle Batteriemodule in einer Parallelschaltung zur Verfügung, um einen Verbraucher mit maximaler Leistung versorgen zu können.

Zur Koordination dieses Ladungsausgleichs ist lediglich eine Kommunikation zwischen den Batteriemodulen untereinander erforderlich. Eine Kommunikationsschnittstelle mit einem externen Ladegerät ist vorteilhafterweise nicht erforderlich.

Durch den Ladungsausgleich zwischen den Batteriemodulen kann die maximal mögliche Reichweite und Leistung des Systems ermöglicht werden, da hierdurch frühzeitig ein Parallelbetrieb mehrerer Batteriemodule ermöglicht wird. Der Parallelbetrieb ist am effizientesten, da weniger der Innenwiderstand der parallelgeschalteten Batteriemodule geringer ist und somit Verluste vermieden werden.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung eines batteriebetriebenen Objekts, welches an ein externes Netzteil angeschlossen ist,
- Figur 2: das Aufladen eines Batteriemoduls mit einem externen Netzteil,
- Figur 3: einen Ladungsausgleich zwischen zwei Batteriemodulen des batteriebetriebenen Objekts und
- Figur 4: das Versorgen eines Verbrauchers des batteriebetriebenen Objekts mit elektrischer Energie.

### Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

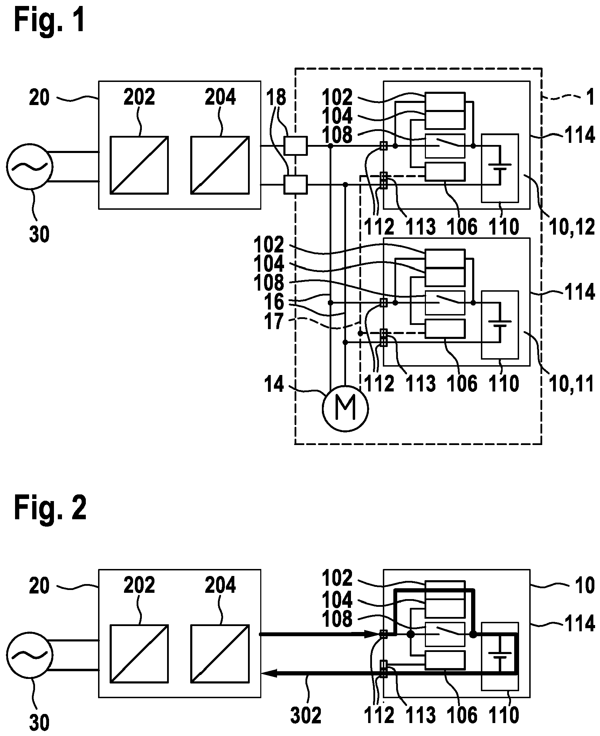

Figur 1 zeigt schematisch ein batteriebetriebenes Objekt 1 welches in dem dargestellten Ausführungsbeispiel zwei Batteriemodule 10, nämlich ein erstes Batteriemodul 11 und ein zweites Batteriemodul 12, sowie einen Verbraucher 14 umfasst. Das batteriebetriebene Objekt 1 ist beispielsweise ein elektrisch angetriebenes Kleinfahrzeug, wie beispielsweise eine eBike oder ein eScooter. Der Verbraucher 14 ist entsprechend beispielsweise als ein Elektromotor ausgestaltet. Die Batteriemodule 10 sind dazu eingerichtet, aus dem batteriebetriebenen Objekt 1 entnommen und wieder eingesetzt zu werden, Dazu umfassen diese ein Gehäuse 114, welches das Innere der Batteriemodule 10 insbesondere außerhalb des batteriebetriebenen Objekts 1 vor Umwelteinflüssen schützt.

Die Batteriemodule 10 umfassen jeweils mindestens eine Batteriezelle 110. In der schematischen Darstellung der Figur 1 ist jeweils eine einzige Batteriezelle 110 dargestellt. Bevorzugt umfasst ein Batteriemodul 10 jedoch eine Vielzahl von Batteriezellen 110. Die Batteriemodule 10 umfassen zudem elektrische Anschlüsse 112, mit denen diese in dem batteriebetriebenen Objekt 1 mit einer gemeinsamen Stromführung 16 verbunden sind. Über die gemeinsame Stromführung 16 sind alle Batteriemodule 10 zueinander parallel geschaltet und können so den Verbraucher 14 gemeinsam mit elektrischer Energie versorgen.

Zum Steuern eines Stromflusses von bzw. zu den Batteriezellen 110 umfassen die Batteriemodule 10 des Weiteren einen Trennschalter 108 und einen Gleichstromwandler 102, welche parallel zueinander geschaltet sind und somit jeweils die Batteriezelle 110 mit einem elektrischen Anschluss 112 verbinden. Des Weiteren sind eine Steuereinheit 104 und ein Bus-Modul 106 vorgesehen. Die Steuereinheit 104 steht mit dem Gleichstromwandler 102, dem Trennschalter 108 und dem Bus-Modul 106 in Verbindung. Dabei ist die Steuereinheit 104 insbesondere für eine Ansteuerung des Trennschalters 108 und des Gleichstromwandlers 102 eingerichtet. Der Trennschalter 108 kann beispielsweise als Relais oder Halbleiterschalter ausgeführt sein.

Zum Austauschen von Informationen zwischen den Steuereinheiten 104 sowie ggf. mit einer dem Verbraucher 14 zugeordneten Steuereinheit (nicht dargestellt) oder einer übergeordneten Steuereinheit (nicht dargestellt) ist in dem batteriebetriebenen Objekt 1 ein Bus 17 vorgesehen. Die Bus-Module 106 der Batteriemodule 10 sind über Busanschlüsse 113 mit dem Bus 17 verbunden.

Das batteriebetriebene Objekt 1 umfasst ferner einen Stromanschluss 18, mit dem dieses mit einem externen Netzteil 20 verbindbar ist. Der Stromanschluss 18 steht wiederum mit der gemeinsamen Stromführung 16 in Verbindung, so dass eine elektrische Verbindung zwischen dem externen Netzteil 20 und allen Batteriemodulen 10 des batteriebetriebenen Objekts 1 hergestellt werden kann. In der in Figur 1 dargestellten Situation sollen die Batteriemodule 10 aufgeladen werden, so dass das externe Netzteil 20 mit dem Stromanschluss 18 verbunden ist.

Das externe Netzteil 20 umfasst beispielsweise einen AC/DC Wandler 202, der mit einer Wechselspannungsquelle 30, beispielsweise eine Steckdose, verbunden werden kann und eine Gleichspannung bereitstellt. Diese Gleichspannung wird über einen DC/DC Wandler 204 auf eine Spannung eingestellt, welche bevorzugt oberhalb der Nominalspannung der Batteriemodule 10 liegt und als Eingangsspannung für die Gleichstromwandler 102 der Batteriemodule 10 geeignet ist.

Zum Aufladen der Batteriemodule 10 bzw. der Batteriezellen 110 der Batteriemodule 10 werden die Trennschalter 108 der Batteriemodule 10 geöffnet und ein Ladestrom über den Gleichstromwandler 102 bereitgestellt, der durch die Steuereinheit 104 gesteuert wird. Eine Steuerung durch das externe Netzteil 20 ist nicht erforderlich, das externe Netzteil 20 stellt lediglich eine Gleichspannung zur Verfügung.

Figur 2 zeigt schematisch ein einzelnes Batteriemodul 10, welches mit einem externen Netzteil 20 aufgeladen wird.

Das Batteriemodul 10 entspricht den Batteriemodulen 10, welche bereits im Zusammenhang mit der batteriebetriebenen Vorrichtung 1 der Figur 1 beschrieben wurden und umfasst ein Gehäuse 114, elektrische Anschlüsse 112, einen Busanschluss 113, einen Gleichstromwandler 102, eine Steuereinheit 104, einen Trennschalter 108, ein Bus-Modul 106 und mindestens eine Batteriezelle 110.

Das externe Netzteil 20 entspricht ebenfalls dem im Zusammenhang mit der Figur 1 beschriebenen externen Netzteil 20 und umfasst einen AC/DC Wandler 202 zum Gleichrichten einer Wechselspannung der Wechselspannungsquelle 30 und einen DC/DC Wandler 204 zum Einstellen der bereitgestellten Gleichspannung. Das externe Netzteil 20 ist auf einer Eingangsseite mit der Wechselspannungsquelle 30 und an einer Ausgangsseite mit den elektrischen Anschlüssen 112 des Batteriemoduls 10 verbunden. Der beim Aufladen fließende Strom ist über die Pfeile mit den Bezugszeichen 302 angedeutet.

Zum Aufladen des Batteriemoduls 10 bzw. der Batteriezellen 110 des Batteriemoduls 10 wird der Trennschalter 108 des Batteriemoduls 10 geöffnet und es wird ein Ladestrom, wie mit den Bezugsteichen 302 angedeutet, über den Gleichstromwandler 102 bereitgestellt, der durch die Steuereinheit 104 gesteuert wird. Eine Steuerung durch das externe Netzteil 20 ist nicht erforderlich, das externe Netzteil 20 stellt lediglich eine Gleichspannung zur Verfügung.

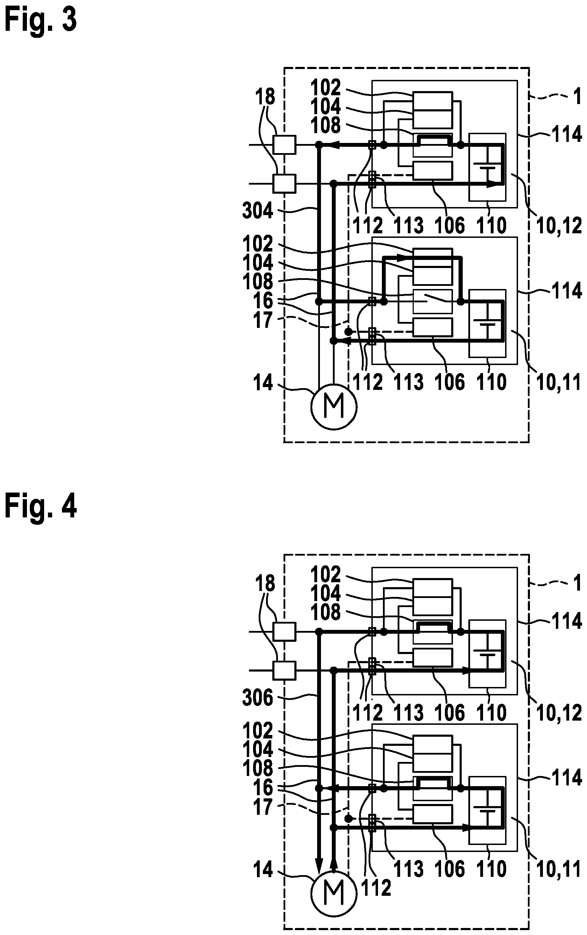

Figur 3 zeigt einen Ladungsausgleich zwischen zwei Batteriemodulen 10 des bereits mit Bezug zur Figur 1 beschriebenen batteriebetriebenen Objekts 1.

In dem in Figur 3 dargestellten Beispiel ist der Ladezustand der beiden Batteriemodule 10 verschieden. Das erste Batteriemodul 11 weist dabei einen geringeren Ladezustand auf als das zweite Batteriemodul 12. Um die Batteriezellen 110 beider Batteriemodule 10 über ihre jeweiligen Trennschalter 108 in einer Parallelschaltung mit der gemeinsamen Stromführung 16 verbinden zu können, ohne das unerwünschte Ausgleichsströme fließen, müssen Abweichungen zwischen den Ladezuständen der beiden Batteriemodule 10 jedoch unterhalb eines vorgegebenen Grenzwerts bleiben. Ist dies wie in der in Figur 3 skizzierten Situation nicht der Fall, wird ein Ladungsausgleich ausgeführt.

Für das Ausführen des Ladungsausgleichs wird der Trennschalter 108 des ersten Batteriemoduls 11 geöffnet und der Trennschalter 108 des zweiten Batteriemoduls 12 geschlossen. Der Gleichstromwandler 102 des zweiten Batteriemoduls 12 ist dabei abgeschaltet, so dass die Batteriezelle 110 des zweiten Batteriemoduls direkt mit der gemeinsamen Stromführung 16 verbunden ist. Zum Aufladen der Batteriezelle 110 des ersten Batteriemoduls 11 wird über den Gleichstromwandler 102, gesteuert durch die Steuereinheit 104, ein Ladestrom bereitgestellt. Der für den Ladungsausgleich fließende Strom ist über Pfeile mit dem Bezugszeichen 304 skizziert.

Bevorzugt wird das Aufladen der mindestens einen Batteriezelle110 des ersten Batteriemoduls 11 beendet, wenn der Ladezustand des ersten Batteriemoduls 11 dem des zweiten Batteriemoduls 12 entspricht. Der Ladezustand wird beispielsweise dann als dem des zweiten Batteriemoduls 12 entsprechend angesehen, wenn die Differenz unterhalb des vorgegebenen Grenzwertes liegt.

Figur 4 zeigt das Versorgen des Verbrauchers 14 des bereits mit Bezug zur Figur 1 beschriebenen batteriebetriebenen Objekts 1 mit elektrischer Energie.

Die Ladezustände des ersten Batteriemoduls 11 und des zweiten Batteriemoduls 12 entsprechen einander, so dass eine Differenz unterhalb des vorgegebenen Grenzwerts liegt. Zur Versorgung des Verbrauchers 14 sind die Batteriezellen 110 beider Batteriemodule 10 über die gemeinsame Stromführung 16 parallel geschaltet. Dazu sind die Trennschalter 108 der beiden Batteriemodule 10 jeweils geschlossen. Somit tragen beide Batteriemodule 10 gleichermaßen zur Versorgung des Verbrauchers 14 mit elektrischer Energie bei. Der dabei fließende Strom ist in der Figur 4 mit Pfeilen mit dem Bezugszeichen 306 angedeutet.

Handelt es sich bei dem Verbraucher 14 beispielsweise um einen elektrischen Antrieb, welcher Antriebsenergie durch Rekuperieren zurückgewinnen kann, kann auf die gleiche Weise die rekuperierte Energie durch die Batteriezellen 110 beider Batteriemodule 10 aufgenommen werden.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zum Betrieben eines batteriebetriebenen Objekts (1) umfassend mindestens zwei Batteriemodule (10) wobei jedes Batteriemodul (10) ein Gehäuse (114) mit einem elektrischen Anschluss (112), mindestens eine Batteriezelle (110), einen Trennschalter (108) zum Trennen einer elektrischen Verbindung zwischen dem elektrischen Anschluss (112) und der mindestens einen Batteriezelle (110), einen Gleichstromwandler (102) und eine Steuereinheit (104) zum Steuern eines Ladestroms zum Aufladen der mindestens einen Batteriezelle (110) umfasst,
wobei die elektrischen Anschlüsse (112) aller Batteriemodule (10) zueinander über ein gemeinsame Stromführung (16) parallel geschaltet sind, und
wobei durch jede der Steuereinheiten (104) ein Ladezustand des jeweiligen Batteriemoduls (10) erfasst wird und bei Vorliegen einer Abweichung der Ladezustände der Batteriemodule (10) oberhalb eines vorgegebenen Grenzwerts ein Ladungsausgleich ausgeführt wird, wobei zum Ausgleichen des Ladezustands jeweils zweier der mindestens zwei Batteriemodule (10) der Trennschalter (108) eines ersten Batteriemoduls (11), welches von den beiden Batteriemodulen (10) den geringeren Ladezustand aufweist, geöffnet wird und von einem zweiten Batteriemodul (12), welches von den beiden Batteriemodulen (10) den höheren Ladezustand aufweist, geschlossen wird und über den Gleichstromwandler (102) des ersten Batteriemoduls (11) ein Ladestrom bereitgestellt wird, um die mindestens eine Batteriezelle (110) des ersten Batteriemoduls (11) aufzuladen.

2. Verfahren nach Anspruch 1, **dadurch gekennzeichnet, dass** beim Aufladen der mindestens einen Batteriezelle (110) des ersten Batteriemoduls (11) ein Ladestrom bis zum Erreichen eines vorgegebenen Zellspannungswerts auf einen vorgegebenen Stromwert konstant gehalten wird und nach dem Erreichen der vorgegebenen Zellspannung derart reduziert wird, dass die Zellspannung auf dem vorgegebenen Zellspannungswert gehalten wird.

3. Verfahren nach Anspruch 1 oder 2, **dadurch gekennzeichnet, dass** das Aufladen der mindestens einen Batteriezelle (110) des ersten Batteriemoduls (11) beendet wird, wenn der Ladezustand des ersten Batteriemoduls (11) dem des zweiten Batteriemoduls (12) entspricht.

4. Verfahren nach Anspruch 1 oder 2, **dadurch gekennzeichnet, dass** das batteriebetriebene Objekt (1) mindestens drei Batteriemodule (10) umfasst und dass für jedes Batteriemodul (10) ein Zielladezustand bestimmt wird und bei der Ausführung des Ladungsausgleichs das Aufladen des ersten Batteriemoduls (11) jeweils beendet wird, wenn dieses seinen Zielladezustand erreicht hat.

5. Verfahren nach einem der Ansprüche 1 bis 4, **dadurch gekennzeichnet, dass** mindestens zwei Batteriemodule (10) einen im Wesentlichen identischen Ladezustand aufweisen und mindestens zwei Batteriemodule (10) mit im wesentlichen identischen Ladezuständen während des Ausführens des Ladungsausgleichs als zweites Batteriemodul (12) verwendet werden und entsprechend deren Trennschalter (108) geschlossen werden.

6. Batteriemodul (10) umfassend ein Gehäuse (114) mit einem elektrischen Anschluss (112), mindestens eine Batteriezelle (110), einen Trennschalter (108) zum Trennen einer elektrischen Verbindung zwischen dem elektrischen Anschluss (112) und der mindestens einen Batteriezelle (110), einen Gleichstromwandler (102) und eine Steuereinheit (104) zum Steuern eines Ladestroms zum Aufladen der mindestens einen Batteriezelle (110), **dadurch gekennzeichnet, dass** das Batteriemodul (10) eingerichtet ist die durch ein Batteriemodul (10) auszuführenden Schritte des Verfahrens nach einem der Ansprüche 1 bis 5 auszuführen.

7. Batteriebetriebenes Objekt (1) umfassend mindestens zwei Batteriemodule (10) gemäß Anspruch 6 und eine Stromführung (16), über die die Batteriemodule (10) zueinander elektrisch parallel geschaltet sind, **dadurch gekennzeichnet, dass** das batteriebetriebene Objekt (1) zusätzlich einen Bus (17) umfasst, welcher mit den Batteriemodulen (10) verbindbar ist und eine Kommunikation der Batteriemodule (10) untereinander ermöglicht, dass die Batteriemodule (10) derart am batteriebetriebenen Objekt (1) aufgenommen sind, dass diese einzeln entnommen und wieder eingesetzt werden können und dass das batteriebetriebene Objekt (1) dazu eingerichtet ist, eines der Verfahren nach einem der Ansprüche 1 bis 5 auszuführen.

8. Batteriebetriebenes Objekt (1) nach Anspruch 7, **dadurch gekennzeichnet, dass** das batteriebetriebene Objekt (1) ferner einen Stromanschluss (18) umfasst, über den ein externes Netzteil (20) mit der Stromführung (16) verbindbar ist.

9. Batteriebetriebenes Objekt (1) nach Anspruch 7 oder 8, **dadurch gekennzeichnet, dass** das batteriebetriebene Objekt (1) als ein elektrisch angetriebenes Werkzeug oder als ein elektrisch angetriebenes Fahrzeug ausgestaltet ist.
